# EUROPÄISCHE PATENTANMELDUNG

(11) **EP 4 711 194 A2**
(43) Veröffentlichungstag der Anmeldung: **18.03.2026**
(21) Anmeldenummer: 25202884.0
(22) Anmeldetag: 17.09.2025
(51) Int. Cl.: B60L 53/18, B60L 53/30

(54) **LADESYSTEM FÜR EINE MEHRZAHL VON ELEKTROFAHRZEUGEN**

(30) Priorität: 17.09.2024 DE 102024126705
(71) Anmelder: Erni, Christoph, 8185 Winkel (CH)
(72) Erfinder: Erni, Christoph, 8185 Winkel (CH)
(74) Vertreter: Caspary, Karsten

(57) **Zusammenfassung**

Es wird ein Ladesystem (1) zum Laden von elektrisch angetriebenen Fahrzeugen (13) bereitgestellt, das eine Flachbandkabelanordnung (5), die dazu eingerichtet und derart angeordnet ist, elektrische Energie von einem Versorgungsnetz an ein Fahrzeug (13) und umgekehrt zu übertragen, eine Laderegeleinheit (7), die dazu eingerichtet ist, die elektrische Energie von der Flachbandkabelanordnung (5) an das Fahrzeug (13) oder von dem Fahrzeug (13) über die Flachbandkabelanordnung (5) an das Versorgungsnetz zu übertragen, ein Ladekabel (11) und eine Steckereinheit (9) umfasst, die dazu eingerichtet ist, von der Laderegeleinheit (7) bereitgestellte elektrische Energie an das Fahrzeug (13) zu übertragen oder von dem Fahrzeug (13) bereitgestellte elektrische Energie an die Laderegeleinheit (7) zu übertragen. Die Laderegeleinheit (7) ist dabei unmittelbar auf der Flachbandkabelanordnung (5) angeordnet und derart montiert, dass der elektrische Kontakt zwischen der Flachbandkabelanordnung (5) und der Laderegeleinheit (7) direkt hergestellt ist.

## Beschreibung

Elektrofahrzeuge sind als Nachfolger von Fahrzeugen mit Verbrennungsmotoren auf dem Vormarsch, weshalb die Infrastruktur für diese Art von Fahrzeugen angepasst werden muss. Insbesondere muss eine Ladeinfrastruktur in öffentlichen und privaten (Tief-) Garagen und Parkhäusern bereitgestellt werden, um ausreichend Ladepunkte für Elektrofahrzeuge zu bieten.

Die Installation von Ladepunkten für Elektrofahrzeuge in (Tief-) Garagen und Parkhäusern stellt eine zunehmende Herausforderung für Immobilienbesitzer und ausführende Gewerke dar, da die Installation einer Vielzahl von Ladepunkten aufgrund der hohen Nachfrage und der handwerksintensiven Montage personelle und finanzielle Kapazitäten beansprucht. Bei der Montage werden bisher in der Regel eine Vielzahl von Kabeltragsystemen wie Kabelrinnen, Kabelkanäle und Kabelrohre verlegt, die jeweils von einem elektrischen Anschlusspunkt zu den Ladestationen verlaufen. Die Kabeltragsysteme selbst werden einzeln an Wand- oder Deckenelementen des Gebäudes montiert, was im Einzelnen ein Ausrichten, Bemaßen und Befestigen dieser bedeutet. Beim Verlegen der Kabel müssen diese entsprechend abgelängt, angeschlossen und häufig durch die Kabeltragsysteme geführt werden. Schließlich muss die jeweilige Ladestation montiert und elektrisch angeschlossen werden, was eine weitere Befestigung an einem Wand- oder Deckenelement erfordert. Zusammenfassend lässt sich sagen, dass die Installation einer Vielzahl von konventionellen Ladepunkten in (Tief-) Garagen und Parkhäusern aufgrund der vielen Befestigungspunkte und Arbeitsschritte sehr arbeitsintensiv ist, weshalb sich dieser Aufwand auch in den Installationskosten widerspiegelt.

Deckenmontierbare Ladesysteme sind allgemein bekannt, z. B. aus der KR 10 2338866 B1, der CN 207388960 U und der KR 10 2475673 B1. Diese Ladesysteme weisen teilweise Schienen auf, auf denen Laderegeleinheiten verfahrbar sind, so dass eine Laderegeleinheit für mehrere Stellplätze verwendet werden kann, je nachdem, ob dort ein Elektrofahrzeug parkt oder nicht. Ladesysteme mit Stromschienen weisen auf den Stromschienen örtlich genau festgelegte Ladeanschlüsse auf, was die Flexibilität der Anbringung deutlich verringert. Daher ist der Montagaufwand von solchen schienengetragenen Ladesystemen im Vergleich zu konventionellen Ladesystemen nicht wesentlich geringer. Die DE 10 2018 131 005 A1 offenbart ein Ladesystem zum Laden von elektrischen Energiespeichern von Fahrzeugen, wobei das Ladesystem ein unter dem Boden unterirdisch verlaufendes Versorgungskabel und mehrere unterirdisch verlaufende Unterflureinheiten aufweist, die über Anschlussmodule mit dem Versorgungskabel verbunden sind. Das im Boden liegende Versorgungskabel kann dabei als Flachbandkabel ausgebildet sein.

Es ist daher die Aufgabe der vorliegenden Erfindung, ein Ladesystem und ein Verfahren zur Montage des Ladesystems bereitzustellen, das die genannten Nachteile des Standes der Technik zumindest teilweise überwindet, einen einfachen Aufbau aufweist, eine flexible sowie schnelle Montage begünstigt und derart ausgestaltet ist, dass die Installation einer Vielzahl von Ladepunkten in (Tief-) Garagen, Parkhäusern und auch Parkplätzen im Freien vereinfacht wird und das für den Betrieb in der genannten Umgebung vorteilhaft ausgestaltet ist.

Diese Aufgabe wird durch den Gegenstand mit den Merkmalen des Anspruchs 1 und des Anspruchs 13 gelöst. Vorteilhafte Ausgestaltungen der Erfindung sind Gegenstand der abhängigen Ansprüche.

Erfindungsgemäß bereitgestellt wird ein Ladesystem zum Laden von elektrisch angetriebenen Fahrzeugen mit einer Flachbandkabelanordnung, die dazu eingerichtet und derart angeordnet ist, elektrische Energie von einem Versorgungsnetz an ein Fahrzeug und umgekehrt zu übertragen, einer Laderegeleinheit, die dazu eingerichtet ist, die elektrische Energie von der Flachbandkabelanordnung an das Fahrzeug oder von dem Fahrzeug über die Flachbandkabelanordnung an das Versorgungsnetz zu übertragen, einem Ladekabel, das an einem ersten Ende mit der Laderegeleinheit verbunden ist und einer Steckereinheit, die mit einem zweiten Ende des Ladekabels verbunden und die dazu eingerichtet ist, von der Laderegeleinheit bereitgestellte elektrische Energie an das Fahrzeug zu übertragen oder von dem Fahrzeug bereitgestellte elektrische Energie an die Laderegeleinheit zu übertragen. Die Laderegeleinheit des erfindungsgemäßen Ladesystems ist einstückig ausgebildet, unmittelbar auf der Flachbandkabelanordnung angeordnet und derart montiert ist, dass der elektrische Kontakt zwischen der Flachbandkabelanordnung und der Laderegeleinheit direkt hergestellt ist. Dabei erfolgt der direkte elektrische Kontakt der Laderegeleinheit mit der Flachbandkabelanordnung mittels Schraubdornen, die in die Flachbandkabelanordnung eindringen.

Das erfindungsgemäße Ladesystem mit einer Flachbandkabelanordnung und einer Laderegeleinheit weist den besonderen technischen Effekt auf, dass die Anzahl von Befestigungspunkten wie auch die Anzahl von herzustellenden elektrischen Verbindungen auf ein Minimum reduziert werden. Durch das Minimieren der Befestigungspunkte und der elektrischen Verbindungen kann der Arbeitsaufwand im Vergleich zu herkömmlichen Ladesystem merklich reduziert werden, wodurch Personalaufwand reduziert und die Installationskosten gesenkt werden können. Auch erhöht sich dadurch die Flexibilität der Montage, weil auf bestimmte Anbringungsanschlüsse auf der Flachbandkabelanordnung verzichtet werden kann. Einstückig ausgebildet bedeutet hierbei für die Laderegeleinheit, dass das Montagepersonal bei der Montage nur ein Bauelement auf der Flachbandkabelanordnung anbringen muss. Die direkte elektrische Verbindung der Laderegeleinheit mit der Flachbandkabelanordnung erfolgt mittels Schraubdornen, die dazu eingerichtet sind, in die Flachbandkabelanordnung einzudringen und einen elektrischen Kontakt zwischen den jeweiligen Adern des Flachbandkabels und den entsprechenden elektrischen Anschlüssen der Laderegeleinheit zu ermöglichen. Hierdurch kann eine aus Installationssicht schnelle und doch dauerhaft zuverlässige elektrische Verbindung geschaffen werden.

Bevorzugt ist das Ladekabel zumindest teilweise ein Spiralkabel und in dadurch in seiner Länge elastisch verstellbar. Alternativ kann eine mechanische, federbetätigte oder elektrisch angetriebene Kabeltrommel an der Laderegeleinheit vorgesehen sein, die das Ladekabel samt Steckereinheit aufrollt und/oder abwickelt. Auch andere, elastisch ausgebildete Haltekonstruktionen für das Ladekabel sind denkbar. Anstelle einer Kabeltrommel kann auch ein Kabelwagensystem vorgesehen sein, das das Ladekabel entlang des Kabelwagensystems führt. Alternativ kann das Ladekabel an einem Schwenkarm befestigt sein, der dazu eingerichtet ist, das Ladekabel in einem vorbestimmten Radius um ein auf einem Stellplatz bzw. Parkplatz stehendes Fahrzeug herum geführt zu werden. Ein Spiralkabel als Ladekabel oder eine Trommel zur Lagerung des Ladekabels erweisen sich als besonders vorteilhaft bei beengten Platzverhältnissen, wie diese typisch in (Tief-) Garagen und Parkhäusern vorzufinden sind.

Weiterhin und unabhängig von der Ausprägung des Ladekabels und dessen Lagerung ist eine Zugentlastung an einer Verbindungsstelle zwischen dem Ladekabel und der Laderegeleinheit vorgesehen, wodurch eine sichere Handhabung des Ladesystems ermöglicht wird. Alternativ oder zusätzlich können Trennmittel vorgesehen sein, die das Ladekabel bei einer Zuglast über einen vorbestimmten Grenzwert kontrolliert von der Laderegeleinheit abtrennen. Dieser Fall tritt insbesondere dann ein, wenn das Ladekabel oder die Steckereinheit sich beim Ein- oder Ausparken an dem Fahrzeug verfängt und von dem Fahrzeug mitgezogen wird, so dass eine erhöhte Zugkraft auf das Ladekabel ausgeübt wird. Die Trennmittel schützen hierdurch die Laderegeleinheit und die Flachbandkabelanordnungen vor Beschädigungen.

Es ist weiterhin bevorzugt, dass die Laderegeleinheit ebenfalls dazu eingerichtet ist, an einer Gebäudestruktur befestigt bzw. montiert zu werden. Dies kann zum Beispiel durch von außen zugängliche Befestigungselemente an der Laderegeleinheit wie Schraublöcher oder Flansche erfolgen. Die Befestigung der Laderegeleinehit an einer Gebäudestruktur kann insbesondere mittels Werkzeugen oder werkzeuglos erfolgen. Beispiele hierfür sind Verkleben mit der Gebäudestruktur oder ein Einsetzen in eine Halterung oder eine dafür vorgesehene Ausnehmung. Hierdurch wird mit besonderem Vorteil ermöglicht, dass die Laderegeleinheit die Flachbandkabelanordnung zumindest teilweise bzw. abschnittsweise trägt, wodurch der Aufwand zur Montage von zusätzlichen Haltern zur Befestigung der Flachbandkabelanordnung reduziert wird.

Die Laderegeleinheit weist vorzugsweise einen Ausschnitt, eine Öffnung bzw. einen Kanal auf, durch den die Flachbandkabelanordnung zumindest teilweise hindurchgeführt ist. Hierdurch kann die Flachbandkabelanordnung während des elektrischen Kontaktierens geführt und abgestützt werden.

Mit weiterem Nutzen ist vorgesehen, dass die Flachbandkabelanordnung und die Laderegeleinheit für eine Deckenmontage, insbesondere in Parkhäusern und (Tief-) Garagen, ausgebildet sind. Alternativ kann die Flachbandkabelanordnung auch auf einem Boden, an einer Wand oder zumindest teilweise oberirdisch innerhalb dieser Elemente angeordnet und beliebig ausgerichtet sein. Die Flachbandkabelanordnung und die Laderegeleinheit können ebenfalls für andere Gebäudetypen, z. B. Hallen, Fähren, Waggons, Mehrfachstellplätze, Mehrfachgaragen, oder auch für den Außenbereich wie Parkplätze und Stellflächen ausgebildet sein und sind nicht auf Parkhäuser oder (Tief-) Garagen beschränkt. Ferner ist das Ladesystem für die Verwendung im Außenbereich vorzugsweise wasserdicht ausgeführt, insbesondere mindestens nach IP54, mehr bevorzugt nach IP 66. Allgemein ist das erfindungsgemäße Ladesystem für alle Orte geeignet und vorgesehen, an welchen Fahrzeuge langfristig oder vorübergehend geparkt werden.

Hierdurch wird eine besonders flexible Installation erreicht, um auf gebäudeseitige bzw. immobilienseitige Gegebenheiten zu reagieren und das Ladesystem bzw. die Flachbandkabelanordnung dahingehend anzupassen.

In bevorzugten Ausführungsformen kann die Flachbandkabelanordnung oberirdisch, insbesondere an einer Gebäudewand, an einer Gebäudedecke, horizontal an einem oberirdisch angeordneten Bauteil oder vertikal an einem oberirdisch angeordneten Bauteil angebracht sein. Denkbar ist beispielsweise die Anbringung an einer Leitplanke oder einer anderen vertikalen Parkplatzbegrenzung. Die Montage der Laderegeleinheit auf der Flachbandkabelanordnung ist auch in diesem Beispiel besonders einfach und erfordert keinerlei zusätzliche Bauelemente.

Bei bestimmten Ausführungsformen kann die einstückige Laderegeleinheit ein Gehäuse umfassen, das ohne weitere Bauelemente an der Flachbandkabelanordnung anbringbar ist. Dadurch wird die Montage ebenfalls wesentlich vereinfacht, weil auf zusätzliche Bauelemente verzichtet werden kann.

Es ist des Weiteren bevorzugt, dass die Steckereinheit kommunikativ mit der Laderegeleinheit und dem Fahrzeug verbunden ist, wobei die Steckereinheit ein Steuergerät aufweist, das dazu eingerichtet ist, die Laderegeleinheit zum Laden des Fahrzeugs oder zum Übertragen von elektrischer Energie von dem Fahrzeug zu der Laderegeleinheit zu steuern. Bevorzugt ist das Steuergerät des Ladegeräts ausschließlich in der Steckereinheit angeordnet, weshalb eine derart modular aufgebaute Steckereinheit für unterschiedliche Ladesysteme vorgesehen werden kann.

Vorzugsweise weist ausschließlich die Steckereinheit ein Bedienelement auf, das einer Bedienperson ermöglicht, die Laderegeleinheit komfortabel während der Benutzung des Ladesystems zu bedienen. Jedoch weist bevorzugt die Laderegeleinheit kein Bedienelement auf. In Varianten, in denen das Bedienelement an der Steckereinheit vorgesehen ist, kann ein Benutzer des Fahrzeugs bzw. des Ladesystems dieses komfortabel und unabhängig von der Anbringung der Laderegeleinheit erreichen. Gerade bei engen Stellplatzverhältnissen in Parkgaragen fällt eine beengte Wegstrecke zwischen der Laderegeleinheit, an der für gewöhnlich Bedienelemente angebracht sind, und dem Fahrzeug weg.

Das Bedienelement ist vorzugsweise mindestens ein haptischer Schalter, ein haptischer Knopf oder ein Mehrzweckschalter bzw. -knopf, der dem Benutzer bei seiner Betätigung eine haptische Rückmeldung vermittelt. Alternativ oder zusätzlich ist das Bedienelement berührungssensitiv ausgebildet, z.B. als kapazitiver Sensor oder in eine Anzeigeeinrichtung integriert.

Optional weist die Laderegeleinheit und/oder die Steckereinheit eine externe Kommunikationsschnittstelle auf, die dazu eingerichtet ist, mit einer externen Steuerung, vorzugsweise einem Lastmanagementsystem oder einer Anwendung auf einem mobilen Endgerät, verbunden zu sein. Die externe Steuerung kann ein Lastmanagement wie ein Home Energy Management System (HEMS), eine Applikation (App) auf einem mobilen Endgerät oder eine Steuerung über einen Server oder eine Cloudanwendung darstellen. Die Laderegeleinheit und/oder die Steckereinheit können mit unterschiedlichen externen Steuerungen gleichzeitig oder abwechselnd verbunden sein. Vorzugsweise werden hierzu unterschiedliche Kommunikationsprotokolle und -techniken verwendet, z. B. Powerline Communication (PLC), LAN, WLAN, Bluetooth, ZigBee, MQTT, LoRaWAN usw. Besonders bevorzugt ist die Kommunikationsschnittstelle ausschließlich in der Steckereinheit vorgesehen, so dass die Steckereinheit modular und unabhängig von der Laderegeleinheit ausgestaltet ist.

Alternativ kann bei Vorhandensein einer externen Kommunikationsschnittstelle auf ein Bedienelement an der Steckereinheit verzichtet werden, wobei Eingaben zur Bedienung des Ladesystems über eine App auf einem mobilen Endgerät durch den Bediener des Ladesystems getätigt werden können. Allgemein können Eingaben zur Bedienung des Ladesystems von einer geeigneten externen Kommunikationsschnittstelle erfolgen, ohne eine bestimmte Technologie oder Gerät dafür zu spezifizieren, z.B. Client-Host- und Cloudsteuerungen.

Durch die externe Kommunikationsschnittstelle wird die Funktionalität des Ladesystems erweitert, es werden verschiedene Arten der Bedienung des Ladesystems ermöglicht, und auch eine Integration mit einem Lastmanagementsystemen kann erreicht werden.

Mit weiterem Nutzen ist die externe Kommunikationsschnittstelle zur Kopplung mit der externen Steuerung vorkonfiguriert, oder die Kopplung zwischen der externen Kommunikationsschnittstelle und der externen Steuerung erfolgt automatisch. Hierzu ist die Kommunikationsschnittstelle mittels eines Computerprogramms derart eingerichtet, dass ein erstmaliges Koppeln mit einer externen Steuerung, insbesondere mit einem HEMS, automatisch erfolgt. Auch bei einem Stromausfall ist vorzugsweise die externe Kommunikationsschnittstelle dazu eingerichtet, eine erneute Kopplung der externen Steuerung durchzuführen.

Hierdurch wird erreicht, dass separate sowie manuell zeitaufwendige Kopplungen und Konfigurationen zwischen jeder externen Kommunikationsschnittstelle, jeder Laderegeleinheit und einem HEMS redundant werden. Ein Koppeln der externen Kommunikationsschnittstelle mit einem mobilen Endgerät wird damit ebenfalls vereinfacht. Insgesamt lässt sich anhand dieser Maßnahmen die Installationszeit zur Installation des Ladesystems weiter verringern.

Optional weist Ladesystem des Weiteren ein erstes und ein zweites Verbindungselement auf, wobei das erste Verbindungselement fest mit der Flachbandkabelanordnung verbunden ist und das zweite Verbindungselement fest mit der Laderegeleinheit verbunden ist. Vorzugsweise sind das erste und das zweite Verbindungselement lösbar miteinander verbindbar und dazu eingerichtet, die von der Flachbandkabelanordnung bereitgestellte elektrische Energie an die Laderegeleinheit und umgekehrt zu übertragen. Vorzugsweise ist das erste Verbindungselement fest an der Flachbandkabelanordnung und optional zusätzlich an einer Gebäudestruktur angebracht, während das zweite Verbindungselement lösbar, insbesondere werkzeuglos, mit dem ersten Verbindungselement koppelbar ist. Es ist weiterhin bevorzugt, dass das zweite Verbindungselement integral mit der Laderegeleinheit ausgebildet ist.

Mithilfe des ersten und des zweiten Verbindungselements kann die Laderegeleinheit mitsamt dem Ladekabel aus ihrer Montageposition entnommen werden und beispielsweise mittels eines Adapters, der das erste Verbindungselement ersetzt, mobil genutzt werden. Die Zweiteilung des Ladesystems ermöglicht zudem eine einfache Montage bzw. eine bessere Erreichbarkeit der Schraubdorne zur elektrischen Kontaktierung.

Es ist des Weiteren vorstellbar, dass die Laderegeleinheit durch die Kopplung des ersten und zweiten Verbindungselements gehalten wird, wodurch die Laderegeleinheit lösbar an einer Gebäudestruktur angeordnet ist. Alternativ kann ein Klemmbügel an dem ersten Verbindungselement oder zweiten Verbindungselement vorgesehen sein, der die Laderegeleinheit, an der das zweite Verbindungselement angeordnet ist, sowohl lösbar als auch werkzeuglos gegen das erste Verbindungelement drückt, wodurch die Kopplung zwischen dem ersten und zweiten Verbindungselement gesichert werden kann. Im Allgemeinen können auch andere Sicherungsmechanismen bzw. Einrichtungen vorgesehen sein, die ein lösbares Koppeln des ersten und zweiten Verbindungselements ermöglichen. Weiterhin ist es bevorzugt, wenn die elektrische Kontaktierung automatisch beim lösbaren Anbringen des zweiten Verbindungselements der Laderegeleinheit an dem ersten Verbindungselement erfolgt.

Bevorzugt umfasst ausschließlich die Steckereinheit eine Anzeigeeinrichtung, die dazu vorgesehen ist, einer Bedienperson Zustände und/oder Informationen zum Lade-/Entladevorgang oder zum Ladesystem selbst anzuzeigen. Die Anzeigeeinrichtung ist vorzugsweise ein Bildschirm oder ein berührungssensitiver Bildschirm. Im Falle eines berührungssensitiven Bildschirms bildet dieser gleichzeitig das Bedienelement. Die Laderegeleinheit selbst weist bevorzugt keine Anzeigeeinrichtung auf, da diese in Abhängigkeit von der Einbausituation der Laderegeleinheit für den Bediener schwer oder gar nicht erkennbar ist. Optional können hingegen Zustandsindikatoren vorgesehen sein, die beispielsweise Auskunft über den Lade- /Entladevorgang oder Auskunft über eine Stellplatzbelegung geben. Zusätzlich oder alternativ können bei deckenmontierten Laderegeleinheiten Leuchtmittel vorgesehen sein, die einen zugehörigen Stellplatz individuell ausleuchten können bzw. hierdurch die Stellplatzbelegung individuell kennzeichnen. Zusätzlich können Steckdosen, wie Schuko-Steckdosen, vorgesehen sein, die ein Betreiben eines Verbrauchers, z. B. eines Staubsaugers oder einer Ladevorrichtung eines E-Bikes am jeweiligen Stellplatz ermöglichen.

Mit den obigen Maßnahmen wird erreicht, dass die Informationen über den Ladevorgang direkt und unmittelbar von der Bedienperson des Fahrzeugs bzw. des Ladesystems ersichtlich sind. Außerdem können bei deckenmontierten Laderegeleinheiten wie auch bei wandmontierten Laderegeleinheiten zusätzliche Funktionen integriert werden, die im Betrieb des Ladesystems von besonderem Nutzen sind.

Mit besonderem Vorteil weist die Laderegeleinheit keinen Leitungsschutzschalter auf. Dadurch, dass die Laderegeleinheit unmittelbar mit der Flachbandkabelanordnung verbunden ist, kann auf (externe) Kabel zwischen Flachbandkabelanordnung und Laderegeleinheit verzichtet werden und deshalb müssen in Relation zu der Flachbandkabelanordnung geringere Kabelquerschnitte zwischen der Flachbandkabelanordnung und der Laderegeleinheit nicht abgesichert werden. Die elektrische Verbindung erfolgt von der Flachbandkabelanordnung unmittelbar mit geeigneten Leiterquerschnitten zu einer Leistungselektronik innerhalb der Laderegeleinheit, die eine Ent-/Ladeleistung regelt. Insgesamt kann somit eine kompaktere und leichtere Laderegeleinheit bereitgestellt werden, wodurch auch die Handhabung, die Montage und der Transport der Laderegeleinheit erleichtert wird. Außerdem wird hierdurch die Montagezeit reduziert, da ein externer Leitungsschutzschalter nicht installiert werden muss.

Erfindungsgemäß wird ebenfalls ein Verfahren zur Montage des Ladesystems nach einem der vorhergehenden Ansprüche vorgeschlagen, wobei das Verfahren die folgenden Schritte aufweist:
- Bereitstellen einer Flachbandkabelanordnung, die dazu eingerichtet und derart angeordnet ist, elektrische Energie von einem Versorgungsnetz an ein Fahrzeug und umgekehrt zu übertragen;
- Bereitstellen einer Laderegeleinheit, die dazu eingerichtet ist, die elektrische Energie von der Flachbandkabelanordnung an das Fahrzeug oder von dem Fahrzeug über die Flachbandkabelanordnung an das Versorgungsnetz zu übertragen;
- Bereitstellen eines Ladekabels, das an einem ersten Ende mit der Laderegeleinheit verbunden ist;
- Bereitstellen einer Steckereinheit, die mit einem zweiten Ende des Ladekabels verbunden und die dazu eingerichtet ist, von der Laderegeleinheit bereitgestellte elektrische Energie an das Fahrzeug zu übertragen oder von dem Fahrzeug bereitgestellte elektrische Energie an die Laderegeleinheit zu übertragen;
- Anordnen der Flachbandkabelanordnung zumindest teilweise an einer Gebäudestruktur; und
- Anbringen der Laderegeleinheit unmittelbar an der Flachbandkabelanordnung, so dass diese derart angeordnet und montiert ist, insbesondere unbeweglich relativ zur Flachbandkabelanordnung, wobei der elektrische Kontakt zwischen Flachbandkabelanordnung und Laderegeleinheit direkt hergestellt wird, wobei
- das direkte elektrische Verbinden bzw. kontaktieren der Laderegeleinheit mit der Flachbandkabelanordnung mittels Schraubdornen, die in die Flachbandkabelanordnung eindringen, erfolgt.

Das erfindungsgemäße Verfahren schlägt eine besonders einfache Art und Weise vor, das erfindungsgemäße Ladesystem zügig zu installieren, wodurch Tiefgaragen und Parkhäuser kostengünstiger für die Immobilieneigentümer mit einer Vielzahl von Ladepunkten ausgestattet werden können.

Das Anordnen der Flachbandkabelanordnung erfolgt mittels üblicher Befestigungsmittel, wobei die Flachbandkabelanordnung teilweise mit zusätzlichen Haltern an Gebäudestrukturen befestigt wird. Alternativ kann das Anordnen darin bestehen, die Flachbandkabelanordnung durch Schächte oder Ausnehmungen innerhalb der Gebäudestruktur zu verlegen. Die Schächte können dabei die Flachbandkabelanordnung sicher aufnehmen. Im unmittelbaren Bereich der Laderegeleinheit hält bevorzugt die Laderegeleinheit die Flachbandkabelanordnung an der Gebäudestruktur. Das Anbringen der Flachbandkabelanordnung muss nicht vollständig für das Gebäude bzw. die Immobilie erfolgen, sondern kann abschnittsweise ausgeführt werden. Hierdurch kann die Anzahl der Befestigungspunkte der Flachbandkabelanordnung an der Gebäudestruktur gesenkt werden, wodurch mit weiterem Vorteil handwerkliche Arbeitszeit eingespart werden kann.

Das Anbringen der Laderegeleinheit umfasst vorzugsweise ein Befestigen der Laderegeleinheit an der Gebäudestruktur, wobei die Laderegeleinheit die Flachbandkabelanordnung zumindest teilweise trägt. Hierdurch kann eine Vielzahl von zusätzlichen Halteeinrichtungen zur Befestigung der Flachbandkabelanordnung an der Gebäudestruktur eingespart werden, womit zugleich die handwerkliche Arbeitszeit zur Installation des erfindungsgemäßen Ladesystems weiter reduziert wird.

Das Verfahren weist während des Anbringens der Laderegeleinheit an der Flachbandkabelanordnung den Schritt eines Einschraubens der Schraubdorne auf, so dass die Schraubdorne in die Leitungsanordnung eindringen. So erfolgt das Anbringen der Laderegeleinheit direkt auf der Flachbandkabelanordnung, so dass diese in unmittelbarem Kontakt miteinander sind. In Ausführungsformen kann das Anbringen der Laderegeleinheit ein Durchführen der Flachbandkabelanordnung durch einen Ausschnitt, insbesondere kanalartigen Ausschnitt, aufweisen. Anschließend wird in dem letzteren Szenario bevorzugt die Laderegeleinheit an einer Gebäudestruktur angebracht und die Laderegeleinheit direkt mit der Flachbandkabelanordnung elektrisch verbunden.

Ferner kann das Verfahren ein elektrisches Verbinden der Flachbandkabelanordnung mit einem elektrischen Gebäudeanschluss aufweisen. Erst hierdurch kann die Laderegeleinheit Strom von der Kabelanordnung aufnehmen oder an diese zurückführen.

Optional kann das Verfahren ein Koppeln der externen Kommunikationsstelle der jeweiligen Laderegeleinheit mit der externen Steuerung aufweisen, für den Fall, dass die initiale Kopplung manuell initiiert wird. Hierdurch werden die Laderegeleinheiten erst nach vollständiger Installation kontrolliert, initial gekoppelt. Die Kopplung der externen Kommunikationsschnittstelle der Laderegeleinheit mit der externen Steuerung erfolgt dabei automatisch, sprich die mit der Installation beauftragte Person, muss keine Einstellungen an dem Gerät vornehmen oder Adressen zur Kopplung, z. B. IP-Adressen angeben.

Die Schritte des erfindungsgemäßen Verfahrens müssen nicht in der exakt oben aufgelisteten Reihenfolge ausgeführt werden, sondern können in einer beliebigen zweckmäßigen Reihenfolge ausgeführt werden. Auch können einzelne Schritte des erfindungsgemäßen Verfahrens beliebig oft zweckgemäß wiederholt werden, z. B. das Anbringen der Laderegeleinheit kann vor dem Anordnen der Flachbandkabelanordnung erfolgen, wobei das Anbringen der Laderegeleinheit für jeden Ladepunkt wiederholt wird. Auch kann das Anordnen der Flachbandkabelanordnung abschnittsweise erfolgen, so dass auch dieser Schritt wiederholbar ist.

Ferner sei angemerkt, dass die Merkmale, die hinsichtlich des erfindungsgemäßen Ladesystems offenbart wurden, auch auf das erfindungsgemäße Montageverfahren und umgekehrt übertragen werden können.

Weitere Vorteile und besondere Ausführungsformen ergeben sich aus der nachfolgenden ausführlichen Beschreibung anhand der beigefügten Zeichnungen, in denen:
- Fig. 1: eine schematische Darstellung einer Ausführungsform des erfindungsgemäßen Ladesystems zeigt;
- Fig. 2.: eine schematische Darstellung einer ersten Ausführungsform der Laderegeleinheit im verbundenen Zustand mit der Leitungsanordnung zeigt;
- Fig. 3: eine schematische Darstellung einer zweiten Ausführungsform der Laderegeleinheit im verbundenen Zustand mit der Flachbandkabelanordnung zeigt;
- Fig. 4: eine schematische Darstellung der Steckereinheit in einer Seitenansicht zeigt; und
- Fig. 5: eine schematische Darstellung der Steckereinheit aus Fig. 4 in einer Rückansicht zeigt.

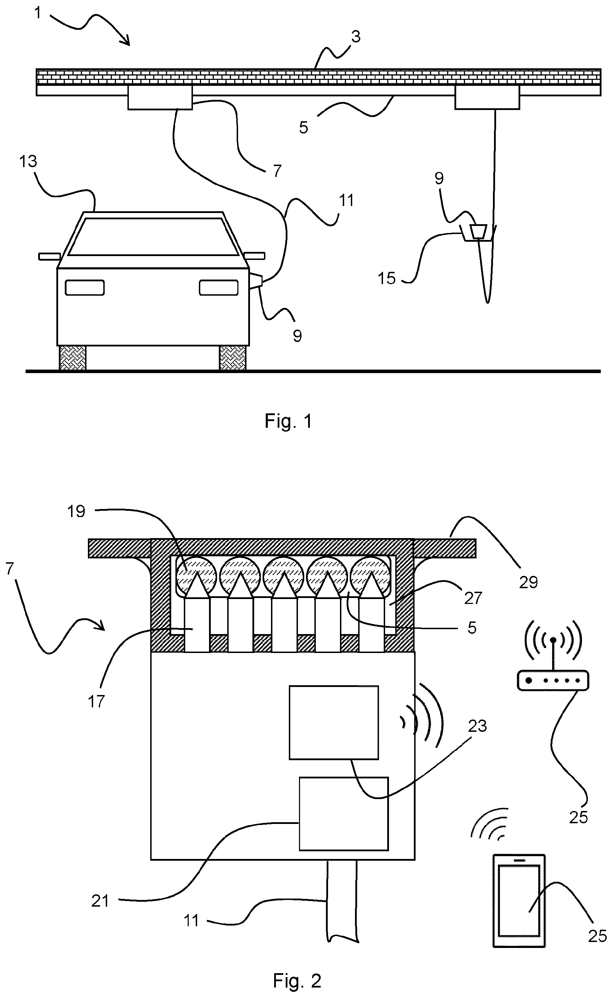

Fig. 1 zeigt in einer schematischen Darstellung das erfindungsgemäße Ladesystem 1 im installierten Zustand. Das hier dargestellte Ladesystem 1 ist an einer Gebäudestruktur 3, insbesondere einer Gebäudedecke bzw. einer Deckenunterkonstruktion eines Gebäudes wie einer Tiefgarage oder einem Parkhaus, angebracht. Das Ladesystem 1 weist eine Flachbandkabelanordnung 5, eine daran angebrachte Laderegeleinheit 7, eine Steckereinheit 9 und ein die Laderegeleinheit 7 mit der Steckereinheit 9 verbindendes Ladekabel 11 auf. Die Flachbandkabelanordnung 5 ist dabei direkt an der Gebäudedecke bzw. der Deckenunterkonstruktion angebracht. Die Laderegeleinheit 7 ist auf die Flachbandkabelanordnung 5 aufgesetzt und gleichzeitig mit ihr elektrisch verbunden. Das Ladekabel 11 hängt von der Laderegeleinheit 7 herab, so dass dieses um ein zuladendes Fahrzeug 13 einfach herumgeführt werden kann. Bei Nichtbenutzung kann das Ladekabel 11 durch eine Halterung zurückgehalten werden, so dass das Ladekabel 11 nicht beim Ein- und Ausparken des Fahrzeugs 13 stört. Auch kann eine Halterung 15 für die Steckereinheit 9 vorgesehen sein, wie es im rechten Teil der Fig. 1 zu sehen ist, so dass diese nicht störend im Bereich des Stellplatzes liegt und beim Ein- und Ausparken behindert oder womöglich überfahren wird.

Das Ladesystem 1 ist dabei nicht auf eine Deckenmontage wie in Fig. 1 abgebildet beschränkt. Andere nicht dargestellte Anbringungen an weiteren Gebäudestrukturen 3, wie beispielsweise an einer Deckenunterkonstruktion, an einer Wand, auf dem oder teilweise im Boden versenkt, oder an einer Leitplanke, sind ebenfalls vorstellbar. Zusätzlich kann in der in Fig. 1 gezeigten Ausführungsform des Ladesystems 1 zwischen dem Fahrzeug 13 und der Laderegeleinheit 7 eine Deckenverkleidung vorgesehen sein, so dass elektrische oder andere bereits vorhandene Installationen von Personen nicht wahrgenommen werden.

Das in Fig. 1 dargestellte Ladekabel 11 ist ein gewöhnliches Kabel, wobei alternativ ein Spiralkabel als Ladekabel 11 vorgesehen sein kann. Alternativ kann an der Laderegeleinheit 7 eine Kabeltrommel vorgesehen sein, die das Ladekabel 11 bei Nichtbenutzung in einer vorbestimmten Höhe über dem Fahrzeug 13 zurückhält, wodurch das Ladekabel 11 und die Steckereinheit 9 beim Ein- und Ausparken nicht stören oder dabei versehentlich überfahren und beschädigt werden.

Fig. 2 stellt eine schematische Darstellung einer ersten Ausführungsform der Laderegeleinheit 7 im elektrisch verbundenen Zustand mit der Leitungsanordnung 5 im Querschnitt dar, wobei in dieser ersten Ausführungsform als auch in der zweiten Ausführungsform ein Flachbandkabel als Leitungsanordnung 5 gewählt ist. Schraubdorne 17 dringen im eingebauten Zustand in das Flachbandkabel ein, insbesondere durchdringen sie dessen Isolierung, und dringen weiter in die jeweiligen Adern 19 des Flachbandkabels ein, um einen direkten elektrischen Kontakt zwischen dem Flachbandkabel und der Laderegeleinheit 7 herzustellen. Die Schraubdorne 17 sind innerhalb der Laderegeleinheit 7 mittels Leiter (nicht dargestellt) unmittelbar mit der Leistungselektronik 21 verbunden, die ein Auf- und Entladen des Fahrzeugs 13 regelt und über die die Lade- bzw. Entladeleistung fließt.

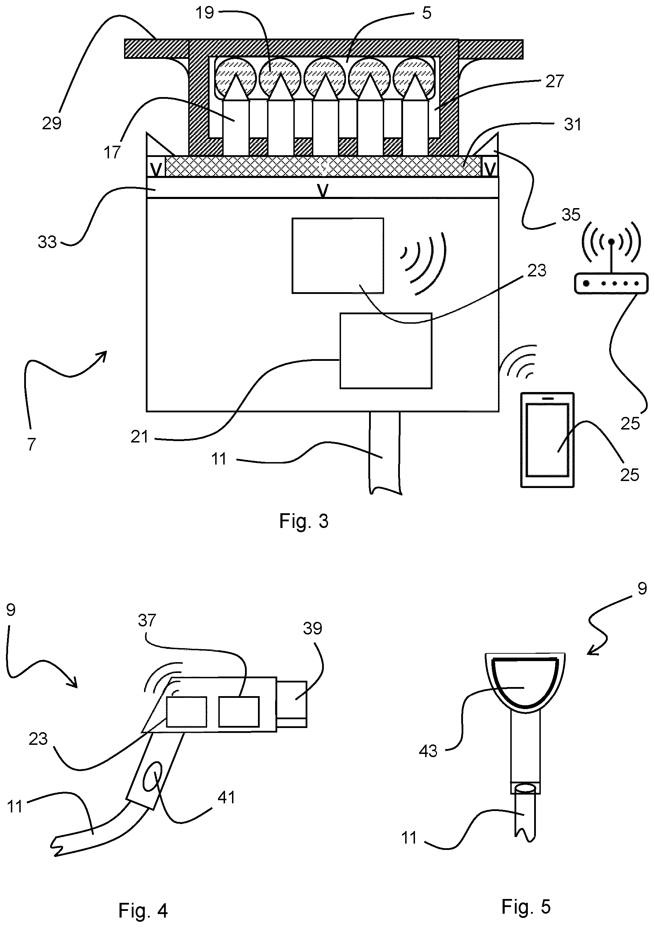

Weiter ist innerhalb der Laderegeleinheit 7 unter anderem eine externe Kommunikationsschnittstelle 23 vorgesehen, die eine Kommunikation mit einer externen Steuerung 25 ermöglicht. In diesem Fall erfolgt die Kommunikation kabellos, wobei auch andere Übertragungstechniken eingesetzt werden können. Die externe Steuerung 25 ist hier ein HEMS, das dazu eingerichtet ist, eine Vielzahl von Laderegeleinheiten 7 zu steuern, bzw. deren Lade- und Entladeleistung zu regeln. Die externe Kommunikationsschnittstelle 23 ist dazu eingerichtet, Befehle des HEMS zu empfangen und Daten bezüglich des Lade- und Entladezustands und Informationen hierüber an die externe Steuerung 25 zu senden. Die Laderegeleinheit 7 ist darüber hinaus in der Lage, gleichzeitig oder abwechselnd mit einer zweiten externen Steuerung 25, wie z. B. hier in den Ausführungsformen der Fig. 2 und 3 dargestellt einem mobilen Endgerät, zu kommunizieren, sowie die zuvor aufgelisteten Zustände und Informationen zu senden, wie auch Befehle von der zweiten externen Steuerung 25 zu empfangen.

In anderen Ausführungsformen weist nicht die Laderegeleinheit 7, sondern die Steckereinheit 9, eine externe Kommunikationsschnittstelle 23 auf. Dies wird weiter im Detail im Zusammenhang der Fig. 4 beschrieben.

Die Laderegeleinheit 7 weist in der dargestellten Ausführungsform einen Kanal 27 auf, der die Flachbandkabelanordnung 5 umgibt. Der Kanal 27 ist hier einteilig ausgebildet. In alternativen, nicht dargestellten Ausführungsformen kann dieser aber auch mehrteilig ausgebildet sein, so dass ein Deckelelement (nicht dargestellt), das angrenzend zu der Gebäudestruktur 3 ist, lösbar mit der Laderegeleinheit 7 verbunden ist. Dies ermöglicht eine einfache Montage bei einer bereits montierter Leitungsanordnung 5, da ein Hindurchführen der Flachbandkabelanordnung 5 durch den Kanal 27 hindurch entfällt. Das Deckelelement kann zwischen der montierten Flachbandkabelanordnung 5 eingeschoben werden und anschließend kann die Laderegeleinheit 7 auf die Flachbandkabelanordnung 5 sowie auf das Deckelelement aufgesetzt werden. Sowohl das Deckelelement als auch der Abschnitt des Kanals 27, der direkt angrenzend zu der Gebäudestruktur 3 ist, stützen bei einem Eintreiben der Schraubdorne 17 in die Flachbandkabelanordnung 5 die Flachbandkabelanordnung 5 gegenüber den auftretenden Kräften ab.

Des Weiteren weist die Laderegeleinheit 7 Befestigungselemente 29 auf, die ein Befestigen der Laderegeleinheit 7 an der Gebäudestruktur 3 zulassen. Die Befestigungselemente 29 sind dabei so angeordnet, dass sie von außen leicht mit Werkzeugen zugänglich sind, womit ein sonst notwendiges, zumindest teilweises Demontieren der Laderegeleinheit 7 entfallen und weitere Arbeitsschritte eingespart werden können.

Das Ladekabel 11 ragt an einer Stelle aus der Laderegeleinheit 7 heraus. Es ist gegenüber auftretender Zugbelastungen mittels einer Zugentlastung innerhalb der Laderegeleinheit 7 (nicht dargestellt) gesichert. Optional können an der Laderegeleinheit 7 Trennmittel (nicht dargestellt) vorgesehen sein, die bei einer Zuglast über einen vorbestimmten Grenzwert das Ladekabel 11 von der Laderegeleinheit 7 abtrennen. Diese Trennmittel sind von besonderem Nutzen in Fällen, in denen beim Ein- oder Ausparken des Fahrzeugs 13 die Steckereinheit 9 unbeabsichtigt nicht vom entfernt wurde Fahrzeug 13 und beispielsweise von einem nicht gezeigten benachbart parkenden Fahrzeug mitgezogen wird, wodurch eine Beschädigung der Laderegeleinheit 7 sowie der Flachbandkabelanordnung 5 droht. Ferner kann auch kann ein unbeabsichtigtes Überfahren des Ladekabels 11 zu einer Zuglast auf die Laderegeleinheit 7 führen. Es ist von weiterem Vorteil, wenn die Trennmittel der Laderegeleinheit 7 von außen zugänglich sind, wodurch eine teilweise Demontage der Laderegeleinheit 7 zur Installation oder Wartung vermieden wird.

Die Trennmittel weisen erste Kupplungen (nicht dargestellt) auf, die mit zweiten Kupplungen des Ladekabels 11 (nicht dargestellt) verbindbar sind. Die ersten und zweiten Kupplungen ermöglichen ein lösbares Verbinden des Ladekabels 11 mit der Laderegeleinheit 7, womit nach einem Trennen des Ladekabels 11, insbesondere bei einer Zugbelastung über dem vorbestimmten Grenzwert, ein erneutes Verbinden des Ladekabels 11 mit der Laderegeleinheit 7 erfolgen kann. Vorzugsweise kann das Koppeln der ersten und zweiten Kupplungen werkzeuglos erfolgen. Auch bei sonstigen Beschädigungen des Ladekabels 11 kann dieses schnell und einfach ausgetauscht werden.

Die schematische Darstellung der Fig. 3 zeigt die zweite Ausführungsform der Laderegeleinheit 7 im verbundenen Zustand mit der Flachbandkabelanordnung 5. Der Aufbau der Laderegeleinheit 7 der Fig. 3 entspricht der der Fig. 2, wobei im Folgenden auf die weiteren Unterschiede eingegangen wird.

Die Laderegeleinheit 7 der Fig. 3 ist mittels einem ersten und zweiten Verbindungselement 31, 33 zweitteilig ausgebildet. Das erste Verbindungselement 31 ist an dem Kanal 27 angeordnet, wodurch im nicht verbundenen Zustand des ersten und zweiten Verbindungselements 31, 33 die Schraubdorne 17 von außen zum Verschrauben zugänglich sind und dabei ein erleichtertes elektrisches Verbinden der Flachbandkabelanordnung 5 mit der Laderegeleinheit 7 erfolgen kann. Die Schraubdorne 17 führen in diesem schematischen Beispiel elektrische Kontakte (nicht dargestellt) nach außen, wo sie wiederum im verbundenen Zustand des ersten und zweiten Verbindungselements 31, 33 einen Kontakt (nicht dargestellt) des zweiten Verbindungselements 33 kontaktieren, der die elektrische Leistung an die Laderegeleinheit 7 leitet.

Das zweite Verbindungselement 33 weist hier elastische Schnapphaken 35 auf, die ein werkzeugloses und wiederlösbares Verbinden des ersten und zweiten Verbindungselements 31, 33 zulassen. Alternativ können andere Verbindungselemente als die hier dargestellten elastischen Schnapphaken 35 verwendet werden, um ein werkzeugloses und lösbares Verbinden des ersten und zweiten Verbindungselements 31, 33 zu ermöglichen. Anstelle der gezeigten Schnapphaken 35 kann beispielsweise ein Klemmbügel (nicht dargestellt) vorgesehen sein, der die Laderegeleinheit 7 zumindest teilweise umgreift und das erste Verbindungselement 33 gegen das zweite Verbindungselement 31 kraftschlüssig presst. Die elektrische Kontaktierung zwischen dem ersten und zweiten Verbindungselement 33, 31 erfolgt automatisch während der Befestigung der Laderegeleinheit 7.

Durch das Lösen bzw. Verbinden der ersten und zweiten Verbindungselemente 31, 33 kann die Laderegeleinheit für die mobile Verwendung abgenommen werden, wobei ein passender Adapter für mobile Verwendung anstelle des ersten Verbindungselements 31 mit dem zweiten Verbindungselement 33 verbunden werden kann. Weiter kann eine Abdeckung (nicht dargestellt) vorgesehen sein, die im nicht verbundenen Zustand des ersten und zweiten Verbindungselements 31, 33 die freiliegenden Kontakte bedeckt, so dass eine versehentliche Kontaktierung der Schraubdorne 17 bzw. der Kontakte, die elektrisch mit den Schraubdornen 17 verbunden sind, und ein dadurch ausgelöster elektrischer Schlag verhindert wird.

Die Fig. 4 stellt eine schematische Darstellung der Steckereinheit 9 in einer Seitenansicht dar. In dieser dargestellten Ausführungsform der Steckereinheit 9 weist diese die externe Kommunikationsschnittstelle 23 und ein Steuergerät 37 unter anderem zur Steuerung der Leistungselektronik 21 der Laderegeleinheit 7 auf. Die externe Kommunikationsschnittstelle 23 ist hierbei in direkter kommunikativer Verbindung mit dem Steuergerät 37 vorgesehen, während in Ausführungsformen, bei denen die externe Kommunikationsschnittstelle 23 in der Laderegeleinheit 7 vorgesehen ist, das Steuergerät 37 über das Ladekabel 11 oder kabellos in kommunikativer Verbindung mit dem Steuergerät 37 der Steckereinheit 9 steht.

Die Steckereinheit 9 weist einen fahrzeugseitigen Steckanschluss 39 auf, insbesondere einen Typ 2-Stecker für elektrisch angetriebene Fahrzeuge gemäß IEC 62196. Andere Steckanschlüsse 39 können alternativ ebenfalls an der Steckereinheit 9 vorgesehen sein. In einem Griffstück der Steckereinheit 9 ist optional ein Bedienelement 41, wie ein Mehrfachschalter bzw. -knopf vorgesehen, um Befehle bzw. Eingaben zum Auf- und Entladen direkt an das Steuergerät 37 zu übermitteln. Das Bedienelement 41 kann unabhängig von der Darstellung der Fig. 4 auch an anderen Stellen der Steckereinheit 9 vorgesehen sein, wobei die Wahl des Bedienelements 41 ebenfalls zweckmäßig und unabhängig von der dargestellten Ausführungsform des Bedienelements 41 erfolgen kann. Insgesamt ist die Steckereinheit 9 bevorzugt mit ergonomisch vorteilhaftem Griffstück pistolenartig ausgestaltet. Das Ladekabel 11 ist über das Griffstück mit der Steckereinheit 9 verbunden, um die elektrische Leistung von der Laderegeleinheit 7 an ein angeschlossenes Fahrzeug 13 zum Auf- und Entladen zu übertragen.

Die Fig. 5 zeigt eine schematische Darstellung der Steckereinheit 9 aus Fig. 4 in einer Rückansicht. In der Fig. 5 ist eine Anzeigeeinrichtung 43 auf der Rückseite der Steckereinheit 9 angebracht, die einem Benutzer des Ladesystems 1 Auskünfte über den Auf- und Entladevorgang gibt. Optional kann die Anzeigeeinrichtung 43 ein berührungssensitiver Bildschirm sein, der es dem Benutzer ermöglicht, Befehle bzw. Eingaben zum Auf- und Entladen an das Steuergerät 37 zur Steuerung der Laderegeleinheit 7 zu übermitteln. In Varianten, in denen ein berührungssensitiver Bildschirm in der Steckereinheit 9 vorgesehen ist, kann auf ein anderes Bedienelement 41, wie den zuvor zu Fig. 4 beschriebenen Mehrfachschalter bzw. -knopf, verzichtet werden.

Anhand der Fig. 1 und 2 wird zuletzt beispielhaft ein Montageverfahren zum Montieren des Ladesystems 1 beschrieben. Zunächst wird die Flachbandkabelanordnung 5 durch den Kanal 27 der Laderegeleinheit 7 hindurchgeführt bis zu der Stelle, an der die Laderegeleinheit 7 im Bereich eines Stellplatzes angebracht werden soll. Wenn sich die Laderegeleinheit 7 an der entsprechenden Stelle befindet, wird diese an der Gebäudestruktur 3 über die an der Laderegeleinheit 7 vorgesehenen Befestigungselemente 29 mit Befestigungsmitteln befestigt. Der befestigte Zustand der Laderegeleinheit 7 an einer Gebäudestruktur 3 ist in Fig. 1 ersichtlich. Im befestigten Zustand trägt die Laderegeleinheit 7 einen Abschnitt der Flachbandkabelanordnung 5 und es kann daher auf eine gewisse Anzahl von zusätzlichen Haltern zur Befestigung der Flachbandkabelanordnung 5 an der Gebäudestruktur 3 verzichtet werden. Darauffolgend wird die direkte elektrische Verbindung zwischen der Flachbandkabelanordnung 5 und der Laderegeleinheit 7 durch Einschrauben der Schraubdorne 13 hergestellt. Dies kann manuell oder auch maschinell mit einem eigens dafür geeigneten Werkzeug erfolgen. Der elektrische verbundene Zustand ist insbesondere in Fig. 2 dargestellt. Zuletzt wird die Flachbandkabelanordnung 5 an der Gebäudestruktur 3, insbesondere einer Decke einer Tiefgarage oder eines Parkhauses, mittels zusätzlicher Halter (nicht dargestellt) befestigt. Die zusätzlichen Halter werden in den Bereichen angebracht, in denen die Flachbandkabelanordnung 5 nicht durch die Laderegeleinheit 7 selbst an der Gebäudestruktur 3 gehalten wird. In einer alternativen, oben skizzierten Ausführungsform der Laderegeleinheit 7, die ein Deckelelement aufweist, ist es ferner möglich, die Flachbandkabelanordnung 5 zunächst an der Gebäudestruktur 3 mittels der zusätzlichen Halter anzubringen und daraufhin die Laderegeleinheiten 7 zu montieren. Bei dieser alternativen Ausführungsform wird das Deckelelement unter die Flachbandkabelanordnung 5 eingeschoben und danach wird die Laderegeleinheit 7 auf die montierte Flachbandkabelanordnung 5 und das Deckelelement aufgesetzt. Zuletzt wird die Laderegeleinheit 7 wie oben beschrieben an der Gebäudestruktur 3 befestigt.

Mit dem erfindungsgemäßen Gegenstand wird ein Ladesystem und ein Verfahren zur Montage dieses Ladesystems bereitgestellt, das einen einfachen Aufbau aufweist, eine schnelle Montage begünstigt und derart ausgestaltet ist, dass die Installation einer Vielzahl von Ladepunkten in Tiefgaragen und Parkhäusern vereinfacht wird und das für den Betrieb in der genannten Umgebung vorteilhaft ausgestaltet ist.

## Patentansprüche

**1.** Ladesystem (1) zum Laden von elektrisch angetriebenen Fahrzeugen (13) mit:
- einer Flachbandkabelanordnung (5), die dazu eingerichtet und derart angeordnet ist, elektrische Energie von einem Versorgungsnetz an ein Fahrzeug (13) und umgekehrt zu übertragen;
- einer Laderegeleinheit (7), die dazu eingerichtet ist, die elektrische Energie von der Flachbandkabelanordnung (5) an das Fahrzeug (13) oder von dem Fahrzeug (13) über die Flachbandkabelanordnung (5) an das Versorgungsnetz zu übertragen;
- einem Ladekabel (11), das an einem ersten Ende mit der Laderegeleinheit (7) verbunden ist; und
- einer Steckereinheit (9), die mit einem zweiten Ende des Ladekabels (11) verbunden und die dazu eingerichtet ist, von der Laderegeleinheit (7) bereitgestellte elektrische Energie an das Fahrzeug (13) zu übertragen oder von dem Fahrzeug (13) bereitgestellte elektrische Energie an die Laderegeleinheit (7) zu übertragen;
wobei die Laderegeleinheit (7) einstückig ausgebildet, unmittelbar auf der Flachbandkabelanordnung (5) angeordnet und derart montiert ist, dass der elektrische Kontakt zwischen der Leitungsanordnung (5) und der Laderegeleinheit (7) direkt hergestellt ist,
wobei der direkte elektrische Kontakt der Laderegeleinheit (7) mit der Flachbandkabelanordnung (5) mittels Schraubdornen (17) erfolgt, die in die Flachbandkabelanordnung (5) eindringen.

**2.** Ladesystem (1) nach Anspruch 1, **dadurch gekennzeichnet, dass** die Flachbandkabelanordnung (5) und die Laderegeleinheit (7) für eine Deckenmontage, insbesondere in Parkhäusern und (Tief-) Garagen, ausgebildet sind.

**3.** Ladesystem (1) nach einem der vorhergehenden Ansprüche, **dadurch gekennzeichnet, dass** die Flachbandkabelanordnung (5) oberirdisch, insbesondere an einer Gebäudewand, an einer Gebäudedecke, horizontal an einem oberirdisch angeordneten Bauteil oder vertikal an einem oberirdisch angeordneten Bauteil angebracht ist.

**4.** Ladesystem (1) nach einem der vorhergehenden Ansprüche, **dadurch gekennzeichnet, dass** die einstückige Laderegeleinheit (7) ein Gehäuse umfasst, das ohne weitere Bauelemente an der Flachbandkabelanordnung (5) anbringbar ist.

**5.** Ladesystem (1) nach einem der vorhergehenden Ansprüche, **dadurch gekennzeichnet, dass** die Steckereinheit (9) kommunikativ mit der Laderegeleinheit (7) und dem Fahrzeug (13) verbunden ist, wobei die Steckereinheit (9) ein Steuergerät (37) aufweist, das dazu eingerichtet ist, die Laderegeleinheit (7) zum Laden des Fahrzeugs (13) oder zum Übertragen von elektrischer Energie von dem Fahrzeug (13) zu der Laderegeleinheit (7) zu steuern.

**6.** Ladesystem (1) nach Anspruch 5, **dadurch gekennzeichnet, dass** ausschließlich die Steckereinheit (9) ein Bedienelement (41) aufweist, das einer Bedienperson ermöglicht, die Laderegeleinheit (7) zu bedienen.

**7.** Ladesystem (1) nach einem der vorhergehenden Ansprüche, **dadurch gekennzeichnet, dass** die Laderegeleinheit (7) und/oder die Steckereinheit (9) eine externe Kommunikationsschnittstelle (23) aufweist, die dazu eingerichtet ist, mit einer externen Steuerung (25), vorzugsweise einem Lastmanagementsystem oder einer Anwendung auf einem mobilen Endgerät, verbunden zu sein.

**8.** Ladesystem (1) nach Anspruch 7, **dadurch gekennzeichnet, dass** die externe Kommunikationsschnittstelle (23) zur Kopplung mit der externen Steuerung (25) vorkonfiguriert ist oder die Kopplung der externen Kommunikationsschnittstelle (23) mit der externen Steuerung (25) automatisch erfolgt.

**9.** Ladesystem (1) nach einem der vorhergehenden Ansprüche, **dadurch gekennzeichnet, dass** das Ladesystem (1) des Weiteren ein erstes und ein zweites Verbindungselement (31, 33) aufweist, wobei das erste Verbindungselement (31) fest mit der Flachbandkabelanordnung (5) verbunden ist und das zweite Verbindungselement (33) fest mit der Laderegeleinheit (7) verbunden ist, wobei das erste und das zweite Verbindungselement (31, 33) lösbar miteinander verbindbar sind und dazu eingerichtet sind, die von der Leitungsanordnung (5) bereitgestellte elektrische Energie an die Laderegeleinheit (7) und umgekehrt zu übertragen.

**11.** Ladesystem (1) nach einem der vorhergehenden Ansprüche, **dadurch gekennzeichnet, dass** ausschließlich die Steckereinheit (9) eine Anzeigeeinrichtung (43) aufweist, die dazu vorgesehen ist, der Bedienperson Zustände und/oder Informationen zum Lade-/Entladevorgang oder zum Ladesystem (1) selbst anzuzeigen.

**12.** Ladesystem (1) nach einem der vorhergehenden Ansprüche, **dadurch gekennzeichnet, dass** die Laderegeleinheit (7) keinen Leitungsschutzschalter aufweist.

**13.** Verfahren zur Montage des Ladesystems (1) nach einem der vorhergehenden Ansprüche, **dadurch gekennzeichnet, dass** das Verfahren die folgenden Schritte aufweist:
- Bereitstellen einer Flachbandkabelanordnung (5), die dazu eingerichtet und derart angeordnet ist, elektrische Energie von einem Versorgungsnetz an ein Fahrzeug (13) und umgekehrt zu übertragen;
- Bereitstellen einer einstückig ausgebildeten Laderegeleinheit (7), die dazu eingerichtet ist, die elektrische Energie von der Flachbandkabelanordnung (5) an das Fahrzeug (13) oder von dem Fahrzeug (13) über die Flachbandkabelanordnung (5) an das Versorgungsnetz zu übertragen;
- Bereitstellen eines Ladekabels (11), das an einem ersten Ende mit der Laderegeleinheit (7) verbunden ist;
- Bereitstellen einer Steckereinheit (9), die mit einem zweiten Ende des Ladekabels (11) verbunden und die dazu eingerichtet ist, von der Laderegeleinheit (7) bereitgestellte elektrische Energie an das Fahrzeug (13) zu übertragen oder von dem Fahrzeug (13) bereitgestellte elektrische Energie an die Laderegeleinheit (7) zu übertragen;
- Anordnen der Flachbandkabelanordnung (5) zumindest teilweise an einer Gebäudestruktur (3); und
- Anbringen der Laderegeleinheit (7) unmittelbar an der Flachbandkabelanordnung (5), so dass diese derart angeordnet und montiert ist, insbesondere unbeweglich relativ zur Flachbandkabelanordnung (5), wobei der elektrische Kontakt zwischen der Flachbandkabelanordnung (5) und der Laderegeleinheit (7) direkt hergestellt wird, wobei das direkte elektrische Verbinden der Laderegeleinheit (7) mit der Flachbandkabelanordnung (5) mittels Schraubdornen (17) erfolgt, die in die Flachbandkabelanordnung (5) eindringen.

**14.** Verfahren zur Montage des Ladesystems (1) nach Anspruch 10, **dadurch gekennzeichnet, dass** das Anbringen der Laderegeleinheit (7) ein Befestigen der Laderegeleinheit (7) an der Gebäudestruktur (3) aufweist, wobei die Laderegeleinheit (7) die Flachbandkabelanordnung (5) zumindest teilweise trägt.
